# EUROPÄISCHE PATENTANMELDUNG

(11) **EP 2 328 304 A1**
(43) Veröffentlichungstag der Anmeldung: **01.06.2011**
(21) Anmeldenummer: 10014600.0
(22) Anmeldetag: 15.11.2010
(51) Int. Cl.: H04L 12/40, G06F 11/18, H04L 12/26

(54) **Schaltungsanordnung und ein Steuergerät für sicherheitsrelevante Funktionen**

(30) Priorität: 25.11.2009 DE 102009055797
(71) Anmelder: Valeo Schalter und Sensoren GmbH, 74321 Bietigheim-Bissingen (DE)
(72) Erfinder: Müller, Stefan, 97944 Boxberg (DE); Staude, Sascha, 74321 Bietigheim-Bissingen (DE)

(57) **Zusammenfassung**

Die Erfindung betrifft eine Schaltungsanordnung zur vermeidung von unerwünschtem Senden von Ausgabedaten über einen Datenbus (12) mit einem Transceiver (52), einer ersten Auswerte- und Steuereinheit (54), welche über den Transceiver (52) und den Datenbus (12) mittels einem ersten Datenkanal (52.1) Empfangsdaten von mindestens einem anderen Busteilnehmer (20, 30, 40) empfängt und mittels einem zweiten Datenkanal (52.2) Ausgabedaten an mindestens einen anderen Busteilnehmer sendet.

Um eine kostengünstige Vermeidung des unerwünschten Sendens von Ausgabedaten über den Datenbus (12) zu ermöglichen, ohne die Empfangs- und/oder Diagnosefunktionen zu beeinträchtigen, ist in den zweiten Datenkanal (52.2) eine ansteuerbare Verbindungseinheit (58) eingeschleift, welche in Abhängigkeit von vorgegebenen Kriterien den zweiten Datenkanal (52.2) zwischen der ersten Auswerte- und Steuereinheit (54) und dem Transceiver (52) zum Senden von Ausgabedaten freigibt und/oder blockiert.

## Beschreibung

Die Erfindung betrifft eine Schaltungsanordnung der im Oberbegriff des Anspruchs 1 genannten Art und ein Steuergerät für sicherheitsrelevante Funktionen mit einer solchen Schaltungsanordnung.

In modernen Kraftfahrzeugen sind bei Steuergeräten zur Ausführung von sicherheitsrelevanten Funktionen bzw. Applikationen, welche mindestens zwei Auswerte- und Steuereinheiten und eine Busschnittstelle aufweisen, verschiedene Lösungen bekannt, um ein unerwünschtes Senden oder Blockieren des Datenbusses durch das Steuergerät zu vermeiden. Die mindestens zwei Auswerte- und Steuereinheiten sind beispielsweise als Mikroprozessorschaltkreise ausgeführt.

Bei einer ersten bekannten Lösung umfasst die Busschnittstelle beispielsweise einen Transceiver, welcher einen speziellen Eingangsport aufweist, mit welchem der Sendeteil des Transceivers deaktiviert werden kann. Die Deaktivierung des Sendeteils des Transceivers erfolgt in der Regel durch die Auswerte- und Steuereinheit des Steuergeräts, welche ansonsten die Busschnittstelle nicht bedient. Als nachteilig kann bei dieser Lösung angesehen werden, dass ein solcher Transceiver sehr teuer ist und nur für bestimmte Bussysteme angeboten wird.

Bei einer zweiten bekannten Lösung umfasst die Busschnittstelle beispielsweise einen Transceiver, dessen Spannungsversorgung abgeschaltet wird. Die Abschaltung des Transceivers erfolgt in der Regel durch die Auswerte- und Steuereinheit des Steuergeräts, welche ansonsten die Busschnittstelle nicht bedient. Als nachteilig kann bei dieser Lösung angesehen werden, dass nicht nur das Senden verhindert wird, sondern in unerwünschter Weise auch kein Datenempfang vom Datenbus und auch keine Diagnose des Transceivers mehr möglich ist.

Bei einer dritten bekannten Lösung umfasst die Busschnittstelle beispielsweise einen Transceiver, wobei die die Busschnittstelle bedienende Auswerte- und Steuereinheit in einen Reset-Zustand versetzt und dort gehalten wird, um eine Bedienung der Busschnittstelle zu verhindern. Als nachteilig kann auch bei dieser Lösung angesehen werden, dass nicht nur das Senden verhindert wird, sondern in unerwünschter Weise auch kein Datenempfang vom Datenbus und auch keine Diagnose des Transceivers mehr möglich ist.

Aufgabe der Erfindung ist es, eine Schaltungsanordnung der im Oberbegriff des Anspruchs 1 genannten Art und ein korrespondierendes Steuergerät für sicherheitsrelevante Funktionen der im Oberbegriff des Anspruchs 9 genannten Art dahingehend weiterzuentwickeln, dass eine kostengünstige Vermeidung des unerwünschten Sendens von Ausgabedaten über einen Datenbus ermöglicht wird, ohne die Empfangs- und/oder Diagnosefunktionen zu beeinträchtigen.

Diese Aufgabe wird erfindungsgemäß durch eine Schaltungsanordnung zur Vermeidung von unerwünschtem Senden von Ausgabedaten über einen Datenbus mit den Merkmalen des Anspruchs 1 und durch ein Steuergerät für sicherheitsrelevante Funktionen mit den Merkmalen des Anspruchs 9 gelöst. Weitere die Ausführungsformen der Erfindung in vorteilhafter Weise ausgestaltende Merkmale enthalten die Unteransprüche.

Der mit der Erfindung erzielte Vorteil besteht darin, dass in einen zweiten Datenkanal eine ansteuerbare Verbindungseinheit eingeschleift ist, welche in Abhängigkeit von vorgegebenen Kriterien den zweiten Datenkanal zwischen einer ersten Auswerte- und Steuereinheit und einem Transceiver zum Senden von Ausgabedaten freigibt und/oder blockiert. Dadurch kann das unerwünschte Senden von Ausgabedaten über den Datenbus in vorteilhafter Weise kostengünstig vermieden werden, ohne die Empfangs- und/oder Diagnosefunktionen des Transceivers zu beeinträchtigen. In anderen Worten ausgedrückt, die einschleifte Verbindungseinheit unterbricht den Ausgabedatenfluss zwischen der ersten Auswerte- und Steuereinheit und dem Transceiver und ermöglicht gleichzeitig zu jedem Zeitpunkt, Daten über den Datenbus zu empfangen und Diagnosefunktionen auszuführen.

In Ausgestaltung der erfindungsgemäßen Schaltungsanordnung steuert die ersten Auswerte- und Steuereinheit und/oder eine zweite Auswerte- und Steuereinheit und/oder eine Überwachungseinheit die Verbindungseinheit zum Freigeben und/oder Blockieren des zweiten Datenkanals an. Die erfindungsgemäße Schaltungsanordnung kommt beispielsweise zur Wirkung, wenn die Gefahr droht, dass die den Transceiver bedienende erste Auswerte- und Steuereinheit aufgrund einer für die zweiten Auswerte- und Steuereinheit erkennbaren Fehlfunktion falsche oder nicht abgesicherte Daten auf dem Bus aussenden will. Dann ist die zweite Auswerte- und Steuereinheit über die Verbindungseinheit auf hardwaretechnischem Weg in der Lage, zu verhindern, dass der Transceiver Ausgabedaten an den Datenbus ausgibt. Bei Systemen, die nur mit einer Auswerte- und Steuereinheit auskommen, kann die Verbindungseinheit anstatt von der zweiten Auswerte- und Steuereinheit von einer andersartigen Überwachungseinheit, wie beispielsweise einem Watchdog usw. angesteuert werden. Als weitere Alternative kann die Verbindungseinheit auch von der ersten Auswerte- und Steuereinheit angesteuert werden, um den Fall eines Port-Defekts abzufangen. Ein solcher Port-Defekt liegt beispielsweise vor, wenn ein Ausgabedatenport des Transceivers permanent dominant ist.

In weiterer Ausgestaltung der erfindungsgemäßen Schaltungsanordnung sind die vorgegebenen Kriterien zum Freigeben des zweiten Datenkanals erfüllt, wenn die erste Auswerte- und Steuereinheit und die zweite Auswerte- und Steuereinheit aktiv sind und ordnungsgemäß arbeiten. Das bedeutet, dass die erfindungsgemäße Schaltungsanordnung in vorteilhafter Weise auch dazu benutzt werden kann, um bei Zwei- oder Mehrprozessorsystemen sicherzustellen, dass erst dann Daten auf dem Datenbus ausgegeben werden, wenn alle Prozessoren aktiv sind und ordnungsgemäß arbeiten. Kritische Situationen können dabei während des Startvorgangs oder bei bzw. nach Vorsorgungsspannungseinbrüchen entstehen.

Die Verbindungseinheit zum Unterbrechen des Ausgabedatenflusses ist so ausgeführt, dass es im Normalbetrieb zu keinerlei Beeinflussung der zu sendenden Ausgabedaten kommt. Umgekehrt darf im Fall einer Blockierung des zweiten Datenkanals kein Datensignal mehr am Datenausgabeport des Transceivers ankommen. Die Wirksamkeit der Blockierung des zweiten Datenkanals kann durch Rückkoppeln des Datensignals am Datenausgabeport des Transceivers geprüft werden. Die Wirksamkeitsprüfung wird in vorteilhafter Weise dann durchgeführt, wenn der Transceiver selbst nicht in der Lage ist, auf dem Datenbus zu senden, d.h. wenn der Transceiver stumm oder ausgeschaltet ist und die Verbindungseinheit sicher eingeschaltet ist. Andernfalls würde im Fall einer Fehlfunktion der Verbindungseinheit zu einem ungewollten Senden des Prüfsignals auf den Datenbus kommen. In weiterer Ausgestaltung der erfindungsgemäßen Schaltungsanordnung überprüfen die erste Auswerte- und Steuereinheit und/oder die zweite Auswerte- und Steuereinheit die am Ausgabedatenport des Transceivers anliegenden Datensignale über einen Rückkoppelkanal, um die Wirksamkeit der Verbindungseinheit zu überwachen.

Die Verbindungseinheit ist beispielsweise als Datenpuffer mit vernachlässigbarer Verzögerungszeit ausgeführt, wodurch in vorteilhafter Weise eine einfache und kostengünstige Implementierung der Verbindungseinheit ermöglicht wird.

Die beschriebene erfindungsgemäße Schaltungsanordnung kann beispielsweise in einem Steuergerät für sicherheitsrelevante Funktionen eingesetzt werden.

Nachfolgend wird ein Ausführungsbeispiel der Erfindung anhand einer zeichnerischen Darstellung näher erläutert.

In der Darstellung zeigt:

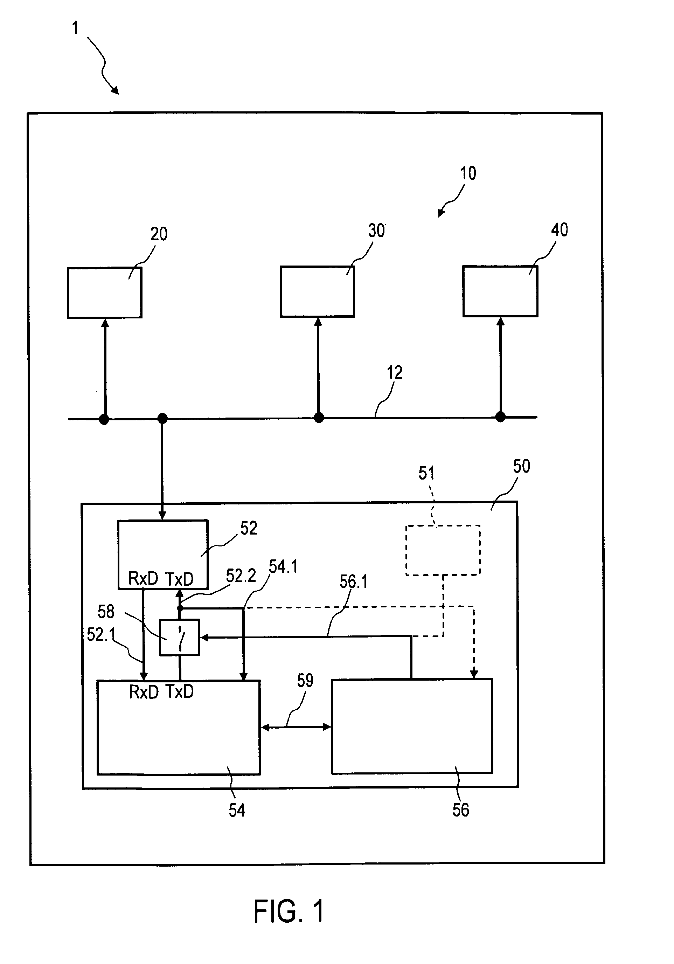

- Fig. 1: ein Blockdiagramm eines Ausführungsbeispiels eines Datenbussystems für ein Fahrzeug mit einer erfindungsgemäßen Schaltungsanordnung.

Die einzige Fig. 1 zeigt ein Fahrzeug 1 mit einem Datenbussystem 10, das einen Datenbus 12, mehrere Busteilnehmer 20, 30, 40, 50 und eine erfindungsgemäße Schaltungsanordnung umfasst. Wie aus Fig. 1 ersichtlich ist umfasst das dargestellte Ausführungsbeispiel der erfindungsgemäßen Schaltungsanordnung zur Vermeidung von unerwünschtem Senden von Ausgabedaten über einen Datenbus 12 einen Transceiver 52, eine erste Auswerte- und Steuereinheit 54, welche über den Transceiver 52 mittels einem ersten Datenkanal 52.1 Empfangsdaten und mittels einem zweiten Datenkanal 52.2 Ausgabedaten mit dem Datenbus 12 austauscht, und eine zweite Auswerte- und Steuereinheit 56. Die Auswerte- und Steuereinheiten 54, 56 sind beispielsweise als Prozessorschaltkreise, insbesondere Mikroprozessorschaltkreise, ausgeführt.

Erfindungsgemäß ist eine ansteuerbare Verbindungseinheit 58 in den zweiten Datenkanal 52.2 eingeschleift, welche in Abhängigkeit von vorgegebenen Kriterien den zweiten Datenkanal 52.2 zwischen der ersten Auswerte- und Steuereinheit 54 und dem Transceiver 52 zum Senden von Ausgabedaten freigibt und/oder blockiert. Die Verbindungseinheit 58 ist beispielsweise als Datenpuffer mit vernachlässigbarer Verzögerungszeit ausgeführt. Durch das Einschleifen der Verbindungseinheit 58 in den zweiten Datenkanal 52.2 zwischen dem Ausgabedatenport TxD der ersten Auswerte- und Steuereinheit 54 und dem Ausgabedatenport TxD des Transceivers 52 ist ein hardwaremäßiges Unterbrechen des Ausgabedatenflusses zum Datenbus 12 möglich. Gleichzeitig ist es zu jedem Zeitpunkt möglich, Eingabedaten vom Datenbus 12 über den zwischen dem Eingabedatenport RxD des Transceivers 52 und dem Eingabedatenport der ersten Auswerte- und Steuereinheit 54 angeordneten ersten Datenkanal 52.1 zu empfangen. Mit der zusätzlichen Verbindungseinheit 58 kann kostengünstig jeder Transceiver 52 am unerwünschten Senden von Ausgabedaten gehindert werden. Die Ansteuerung der Verbindungseinheit 58 zur Blockierung des zweiten Datenkanals 52.2 erfolgt im dargestellten Ausführungsbeispiel in der Regel über einen Steuerkanal 56.1 durch die zweite Auswerte- und Steuereinheit 56, welche ansonsten den Transceiver 52 nicht bedient. Alternativ kann die Verbindungseinheit 58 auch von einer andersartigen gestrichelt dargestellten Überwachungseinheit 51 angesteuert werden. Bei der Verwendung der erfindungsgemäßen Schaltungsanordnung in einem Steuergerät 50 für sicherheitsrelevante Funktionen, überwacht die zweite Auswerte- und Steuereinheit 56 über einen internen Datenkanal 59 die Funktion der ersten Auswerte- und Steuereinheit 54. Daher erkennt die zweite Auswerte- und Steuereinheit 56, dass die vorgegebenen Kriterien zum Blockieren des zweiten Datenkanals 52.2 erfüllt sind, wenn die ersten Auswerte- und Steuereinheit 54 aufgrund einer erkannten Fehlfunktion falsche und/oder nicht abgesicherte Ausgabedaten senden will. Über den Steuerkanal 56.1 und die Verbindungseinheit 58 ist die zweite Auswerte- und Steuereinheit 56 dann auf hardwaretechnischem Weg in der Lage, das Senden der falschen und/oder nicht abgesicherten Ausgabedaten zu verhindern.

Des Weiteren kann die erfindungsgemäße Schaltungsanordnung auch dazu benutzt werden, um bei Zwei- oder Mehrprozessorsystemen sicherzustellen, dass erst dann Daten auf dem Datenbus 12 ausgegeben werden, wenn alle Prozessoren aktiv sind und ordnungsgemäß arbeiten. Kritische Situationen können dabei während des Startvorgangs und/oder bei bzw. nach Vorsorgungsspannungseinbrüchen entstehen. Bei Datenbussen mit aktiver Bestätigung, wie beispielsweise einem CAN-Bus, sollte beachtet werden, dass im Falle einer Blockierung des zweiten Datenkanals 52.2 auch ein Bestätigungssignal nicht gesendet werden kann.

Die Verbindungseinheit 58 zum Unterbrechen des Ausgabedatenflusses ist so beschaffen, dass es im Normalbetrieb zu keinerlei Beeinflussung der zu sendenden Ausgabedaten kommt. Umgekehrt kommt im Fall einer Blockierung des zweiten Datenkanals 52.2 kein Ausgabedatensignal mehr am Ausgabedatenport TxD des Transceivers 52 an. Die Wirksamkeit der Blockierung des zweiten Datenkanals 52.2 kann über einen Rückkoppelkanal 54.1 durch Rücklesen des Datensignals am Ausgabedatenport TxD des Transceivers 52 geprüft werden. Die Wirksamkeitsprüfung wird in vorteilhafter Weise dann durchgeführt, wenn der Transceiver 52 selbst nicht in der Lage ist, auf dem Datenbus 12 zu senden und die Verbindungseinheit 58 zur Blockierung des Ausgabedatensignals sicher eingeschaltet ist. Andernfalls würde es im Fall einer Fehlfunktion der Verbindungseinheit 58 zu einem ungewollten Senden des Prüfsignals auf den Datenbus 12 kommen.

Die Rücklesung des Datensignals am Ausgabedatenport TxD des Transceivers 52 erfolgt im einfachsten Fall über den Rückkoppelkanal 54.1 durch die erste Auswerte- und Steuereinheit 54. Alternativ kann die Rücklesung des Datensignals am Ausgabedatenport TxD des Transceivers 52 aber auch über den gestrichelt dargestellten Rückkoppelkanal 54.1 durch die zweite Auswerte- und Steuereinheit 56 oder einen anderen geeigneten Baustein erfolgen.

## Patentansprüche

1. Schaltungsanordnung zur Vermeidung von unerwünschtem Senden von Ausgabedaten über einen Datenbus (12) mit einem Transceiver (52), einer ersten Auswerte- und Steuereinheit (54), welche über den Transceiver (52) und den Datenbus (12) mittels einem ersten Datenkanal (52.1) Empfangsdaten von mindestens einem anderen Busteilnehmer (20, 30, 40) empfängt und mittels einem zweiten Datenkanal (52.2) Ausgabedaten an mindestens einen anderen Busteilnehmer sendet,
**gekennzeichnet durch**
eine in den zweiten Datenkanal (52.2) eingeschleifte ansteuerbare Verbindungseinheit (58), welche in Abhängigkeit von vorgegebenen Kriterien den zweiten Datenkanal (52.2) zwischen der ersten Auswerte- und Steuereinheit (54) und dem Transceiver (52) zum Senden von Ausgabedaten freigibt und/oder blockiert.

2. Schaltungsanordnung nach Anspruch 1,
**dadurch gekennzeichnet,**
**dass** die ersten Auswerte- und Steuereinheit (54) und/oder eine zweite Auswerte- und Steuereinheit (56) und/oder eine Überwachungseinheit (51) die Verbindungseinheit (58) zum Freigeben und/oder Blockieren des zweiten Datenkanals (52.1) ansteuert.

3. Schaltungsanordnung nach Anspruch 1 oder 2,
**dadurch gekennzeichnet,**
**dass** die vorgegebenen Kriterien zum Blockieren des zweiten Datenkanals (52.2) erfüllt sind, wenn die ersten Auswerte- und Steuereinheit (54) aufgrund einer erkannten Fehlfunktion falsch und/oder nicht abgesicherte Ausgabedaten aussendet.

4. Schaltungsanordnung nach Anspruch 3,
**dadurch gekennzeichnet,**
**dass** die zweite Auswerte- und Steuereinheit (56) die Fehlfunktion der ersten Auswerte- und Steuereinheit (54) erkennt.

5. Schaltungsanordnung nach einem der vorgehenden Ansprüche, **dadurch gekennzeichnet,**
**dass** die vorgegebenen Kriterien zum Freigeben des zweiten Datenkanals (52.2) erfüllt sind, wenn die erste Auswerte- und Steuereinheit (54) und die zweite Auswerte- und Steuereinheit (56) aktiv sind und ordnungsgemäß arbeiten.

6. Schaltungsanordnung nach einem der vorherigen Ansprüche, **dadurch gekennzeichnet,**
**dass** die erste Auswerte- und Steuereinheit (54) und/oder die zweite Auswerte- und Steuereinheit (54) zur Funktionsüberprüfung der Verbindungseinheit (58) über einen Rückkoppelkanal (54.1) an einem Ausgabedatenport (TxD) des Transceivers (52) anliegende Datensignale überprüfen.

7. Schaltungsanordnung nach Anspruch 6,
**dadurch gekennzeichnet,**
**dass** die erste Auswerte- und Steuereinheit (54) und/oder die zweite Auswerte- und Steuereinheit (56) die Funktionsüberprüfung der Verbindungseinheit (58) im deaktivierten Zustand des Transceivers (52) durchführen.

8. Schaltungsanordnung nach einem der vorgehenden Ansprüche, **dadurch gekennzeichnet,**
**dass** die Verbindungseinheit (58) als Datenpuffer mit vernachlässigbarer Verzögerungszeit ausgeführt ist.

9. Steuergerät für sicherheitsrelevante Funktionen mit einer ersten Auswerte- und Steuereinheit (54), einer zweiten Auswerte- und Steuereinheit (56) und einem Transceiver (52),
**gekennzeichnet durch**
eine Schaltungsanordnung nach einem der Ansprüche 1 bis 8.
